# EUROPEAN PATENT SPECIFICATION

(11) **EP 0 526 230 B1**
(45) Date of publication and mention of the grant of the patent: **16.10.1996**
(21) Application number: 92306994.2
(22) Date of filing: 31.07.1992
(51) Int. Cl.: C08L 51/06, C08L 29/04, C08L 77/00, C08L 67/00, C08L 33/20, C08L 23/02, C08L 101/00, C08F 255/00, C08F 255/02

(54) **Polyolefin based blend containing reactive low molecular weight compound and process for making the same**
Reaktive mit niedrigem Molekulargewicht enthaltende Mischung aus Polyolefinen und Verfahren zu ihrer Herstellung
Mélange à base de polyoléfines contenant un composé réactif à bas poids moleculaire et procédé pour le faire

(30) Priority: 01.08.1991 KR 1334791
(43) Date of publication of application: 03.02.1993
(73) Proprietor: YUKONG LIMITED, Yongdungpo-gu, Seoul (KR)
(72) Inventor: Lee, Young Geun, Namdong-gu, Inchen (KR); Lee, Moon Seok, Songpa-gu, Seoul (KR); Cho, Yong Gyun, Nam-gu, Inchen (KR)
(74) Representative: Wilkinson, Stephen John

(56) References cited:
- EP-A- 0 152 180
- WO-A-90/15101
- WO-A-91/05008

## Description

### BACKGROUND OF THE INVENTION

### Field of the Invention

The present invention relates to a process of making a polyolefin-based blend containing reactive low molecular weight compounds. More particularly it relates to a process of making an heterogeneous blend of a polyolefin and a second polymer incompatible with the polyolefin containing reactive low molecular weight compounds for providing compatibility at the interface between the polyolefin and the second polymer. It also relates to articles made using such a process.

Processes for blending a polyolefin and a second polymer incompatible with the polyolefin have been well-known. Such a second polymer exhibits high barrier to permeation of organic solvent and gas and excellent physical properties such as mechanical strength, heat resistance and thermal moldability. However, the polymer is expensive. Polyolefin exhibits excellent barrier to permeation of water and polar solvent, improved impact resistance and improved processability. Also, such a polyolefin is inexpensive. Although blending techniques for utilizing advantages of the above-mentioned two materials have been developed, blending of the materials is difficult, because of the incompatibility of the materials.

There have been proposed several patents wherein a third component is added as a macromolecular compatibilizer for maximizing the purpose of the blending.

US Patent No. 3,093,255 discloses a process of making homogeneous blends of polyolefin and polyamide. The patent clearly discloses that the polyolefin and the polyamide must be subjected to intensive mixing without using any compatibilizer and that articles formed from the blends exhibit decreased permeability.

US Patent Nos. 3,373,222, 3,373,223 and 3,373,224 all disclose homogeneous polymeric blends of polyolefin, polyamide and some compatibilizer to obtain homogeneous blends exhibiting decreased permeability and improved mechanical properties as compared with blends having no compatibilizer. For the compatibilizer, US Patent No. 3,373,222 discloses carboxylated polyolefin; US Patent No. 3,373,223 discloses a copolymer of ethylene with acrylic acid or methacrylic acid; and US Patent No. 3,373,224 discloses a metal ion-containing copolymer.

On the other hand, US Patent No. 3,975,463 discloses heterogeneous blends of polyolefin and saponified ethylene-vinyl acetate copolymer. In this patent, a carbonyl-containing thermoplastic polymer is used as a compatibilizer. US Patent No. 4,410,482 discloses heterogeneous blends of polyolefin and polyamide. In this patent, a carboxyl-grafted polyolefin is used as a compatibilizer so that a small amount of the polyamide component forms discontinuous multiple laminar layers in the polyolefin matrix. The Patent discloses that articles formed from the blends exhibit improvements in mechanical properties and barrier to permeation of fluid, liquid and gas.

In these patents, a macromolecular compatibilizer is incorporated in the blend in an amount of 0.25 weight % to 25 weight % so that adhesive force occurs at the interface between the polyolefin and the second polymer incompatible with the polyolefin, thereby obtaining decreased permeability and improved mechanical properties in final articles. The macromolecular compatibilizer includes a copolymer of polyolefin having carboxylic moieties attached thereto, either on the polyolefin backbone itself or on side chains thereof. Generally, such a macromolecular compatibilizer can be prepared by direct synthesis or by grafting. In case of grafting, at least one selected from a group consisting of carboxylic acid, anhydride, ester monomer and the like is grafted onto a polyolefin backbone or side chains thereof. These techniques are described in greater detail in US Patent Nos. 4,026,967 and 3,953,655.

Also EP-A-015218 relates to a polymer alloy which is prepared by reacting a polyvinyl alcohol polymer having a degree of hydrolysis of less than 98 mole percent with less than the stoichiometric amount of a functional olefin polymer containing functional groups which are reactive with the hydroxyl groups of the polyvinyl alcohol polymer whereby there is obtained a mixture of grafted and ungrafted polyvinyl alcohol polymers, the grafted polyvinyl alcohol polymer having less than all the available hydroxyl groups reacted with said functional groups.

For making a blend of the polyolefin and the second polymer using a polyolefin based copolymer as the compatibilizer as above-mentioned, however, a step of preparing the compatibilizer has to be added to the overall process for making a final article. Moreover, only a part of the compatibilizer is present at the interface between the polyolefin phase and the second polymer phase while a substantial part of the compatibilizer is heterogeneously diffused in the total composition. As a result, it is difficult to obtain a sufficient adhesion effect and thereby to maximise the physical properties of the final article.

### SUMMARY OF THE INVENTION

Therefore, an object of the invention is to provide a process of making a polyolefin based blend containing reactive low molecular weight compounds capable of solving the problems encountered in the above-mentioned prior arts.

The reactive low molecular weight compounds react chemically or physically with both the polyolefin and the second polymer at the interfaces between the two component polymer phases to make the copolymer formed to be concentrically present at the interfaces, thereby achieving an improvement in adhesiveness at the interface and compatibility.

For accomplishing the object, the present invention provides a process of making a polyolefin-based blend comprising the steps of:
making a mixture by adding reactive low molecular weight compounds consisting essentially of a polar compound selected from one or more ethylenically unsaturated monomers containing one or two polar functional groups which can react with the second polymer and an initiator in an amount of from 0.01 weight % to 0.72 weight % to particles of a polyolefin selected from polyethylene, polypropylene, polybutylene and a copolymer thereof in an amount of from 60 weight % to 96 weight % and particles of a second polymer selected from polyamide, polyester, ethylene/vinyl alcohol copolymer and polyacrylonitrile in an amount of from 4 weight % to 40 weight %, the weight % of the reactive low molecular weight compounds being based on the total weight of said polyolefin and said second polymer; and
extruding the mixture under a low shear melt mixing conditions to make a heterogeneous blend having discontinuous multiple laminar layers of the mixture.

### BRIEF DESCRIPTION OF THE DRAWING

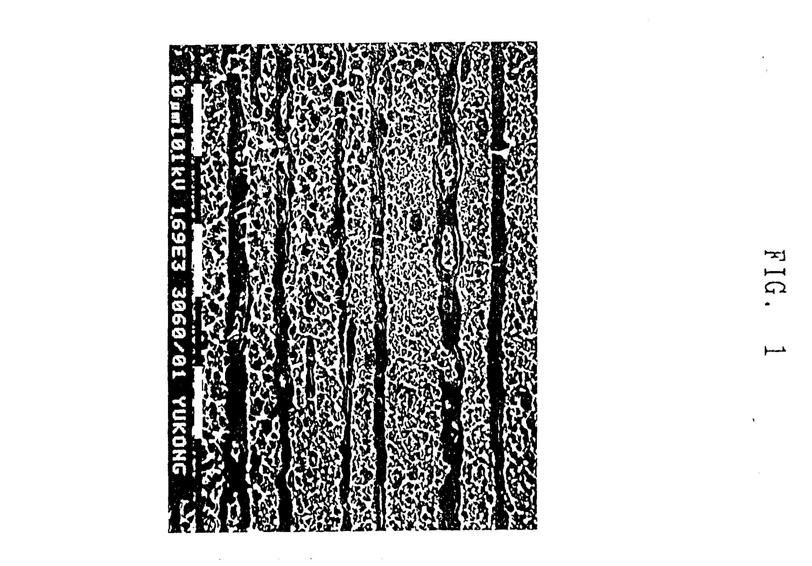

FIG. 1 is a scanning electron microscopic photograph (x3,100) of a laminar structure of the wall section of a bottle blow molded in accordance with Example 1 of the present invention.

### DESCRIPTION OF THE INVENTION

Reactive low molecular weight compounds used in the present invention broadly comprise two compounds; one being a polar compound having a functional group reactable with the polyolefin and the second polymer, and the other being an initiator causing a chemical reaction between the polyolefin component and the polar compound. That is, these two compounds react with each other at interfaces between the polyolefin and the second polymer and produce copolymers of the latter two components, thereby achieving improvements in adhesiveness at the interfaces and compatibility.

The polar compound is one or more ethylenically unsaturated monomers containing one or two polar functional groups which can react with the second polymers and is properly selected, depending on the chemical structure of second polymer. The polar compound is preferably one or more compounds selected from carboxylic acids, anhydrides and ester monomers. Examples of carboxylic acids are ethacrylic acid, methacrylic acid, acrylic acid, maleic acid, fumaric acid and itaconic acid. Examples of ester monomers include glycidyl methacrylate, 2-hydroxyethyl acrylate, 2-hydroxyethyl methacrylate, monoethyl maleate, diethyl maleate and di-n-butyl maleate. Examples of anhydrides include maleic anhydride, dodecenyl succinic anhydride, 5-norbornene-2,3-anhydride and nadic anhydride, 5-norbornene-2,3-anhydride and nadic anhydride.

The polar compound according to the present invention is not limited to those examples mentioned above and other polar compounds having similar chemical structures may be used.

The initiator is preferably one or more compound selected from acyl peroxides, dialkyl or aralkyl peroxides, peroxyester, hydroperoxides, ketone peroxides and azoic compounds. One example of a suitable acyl peroxide is benzoyl peroxide. Examples of dialkyl or aralkyl peroxides include di-t-butylperoxide, dicumyl peroxide, cumyl butylperoxide, 1,1-di-t- butylperoxy-3,5,5-trimethylcyclohexane, 2,5-dimethyl-2,5-di-t-butylperoxyhexane and bis (α-t-butylperoxy isopropyl benzene). Examples of peroxyester include t-butylperoxy pivalate, t-butyl di(perphthalate), dialkylperoxy monocarbonate, peroxy dicarbonate, t-butyl perbenzoate, 2,5-dimethylhexyl-2,5-di(perbenzoate) and t-butyl peroctoate. Examples of hydroperoxides include t-butyl hydroperoxide, p-methane hydroperoxide, pinane hydroperoxide and cumene hydroperoxide. Examples of ketone peroxides include cyclohexanone peroxide and methylethylketone peroxide. An example of a suitable azoic compound is azobis isobutyronitrile.

The initiator according to the present invention is not limited to those examples mentioned above and other initiators having similar chemical structures may be used.

In the blend according to the present invention, the polyolefin is used in an amount of 60 weight % to 96 weight % of the total composition and 80 weight % to 94 weight % is preferred. The second polymer incompatible with the polyolefin is used in an amount of 4 weight % to 40 weight % and 6 weight % to 20 weight % is preferred. The total amount of the reactive low molecular weight compounds used is in the range of from 0.01 weight % to 0.72 weight % based on the total weight of the polyolefin and the second polymer. In the reactive low molecular weight compounds, the polar compound is preferably used in an amount of from 0.01 weight % to 0.5 weight % and more preferably from 0.03 weight % to 0.25 weight %, based on the total weight of the polyolefin and the second polymer. The initiator is preferably used in an amount of from 0.0004 weight % to 0.2 weight % and more preferably from 0.0008 weight % to 0.1 weight %, based on the total weight of the polyolefin and the second polymer.

In addition to two reactive low molecular weight compound components mentioned above, the blend of the present invention may contain a salt formation agent for enhancing adhesiveness at the interface between the polyolefin and the second polymer. The salt formation agent includes materials which are reactable with acid moieties of the polar compound, to produce salts. Examples of suitable salt formation agents include magnesium oxide, titanium oxide and zinc oxide. In accordance with the present invention, the salt formation agent is preferably used in an amount of from 0.004 weight % to 0.18 weight % based on the total weight of the polyolefin and the second polymer, more preferably from 0.01 weight % to 0.1 weight %. In addition, some additives in a trace may be used which include pigments, stabilizers, lubricants and the like.

When the second polymer is contained in an amount of more than 40 weight % in the blend, it cannot form discontinuous multiple laminar layers. An amount of less than 4 weight % of the second polymer is insufficient to bring about any considerable improvement in the mechanical properties and any considerable decrease in the permeability. When the content of the polar compound exceeds 0.5 weight %, the finally produced articles exhibit severe discoloration. If the content of the polar compound is less than 0.01 weight %, the adhesion effect occurring at the interface between the polyolefin and the second polymer is considerably reduced. On the other hand, the initiator of more than 0.2 weight % results in a severe crosslinking reaction on the polyolefin and thus makes the molding of articles difficult. When the content of the initiator is less than 0.0004 weight %, the initiation reaction occurring between the polyolefin and the polar compound is insufficient.

Examples of the matrix phase polyolefin include polyethylenes (HDPE, LDPE and LLDPE), polypropylene, polybutylene, and copolymers thereof. Examples of the second polymer include polyamides, polyesters, ethylene/vinyl alcohol copolymers, and polyacrylonitriles. Examples of polyamides include nylon 6, nylon 66, nylon 6/66 copolymer, nylon 610 and nylon 12. Examples of polyesters include polyethylene terephthalate and polybutylene terephthalate.

As mentioned above, the present invention also provides a process of making a polyolefin based blend comprising the steps of adding reactive low molecular weight compounds in a total amount of from 0.01 weight % to 0.72 weight % to particles of a polyolefin of 60 weight % to 96 weight % and a second polymer of 4 weight % to 40 weight % incompatible with the polyolefin, the weight % of the reactive low molecular weight compounds being based on the total weight of the polyolefin and the second polymer, and blending the three components under a low shear mixing conditions to make an heterogeneous blend thereof.

The reactive low molecular weight compounds are used for the purpose of providing the adhesiveness and the compatibility, as mentioned above. The addition of these low molecular weight compounds can be conducted by primarily coating the low molecular weight compounds onto the surfaces of particles of the second polymer, uniformly mixing the second polymer particles coated with the low molecular weight compounds with the polyolefin particles, for instance in a tumble mixer, to make a particle mixture of those polymer particles and then feeding the blend into an extruder. Otherwise, the addition of low molecular weight compounds may be conducted by uniformly mixing particles of the polyolefin, particles of the second polymer and the reactive low molecular weight compounds, for instance in a tumble mixer, to make a particle mixture of those polymer particles, and then feeding the mixture into an extruder. However, the former case is preferred in terms of mechanical properties and impermeability.

Using extruders for achieving a blow molding, a blown film molding, a pipe molding and a sheet molding, the present invention makes it possible to produce shaped articles, exhibiting improvements in mechanical properties and impermeability, such as containers, films, pipes, sheets and filaments.

It is noted that the proper shear mixing conditions in an extruder should be determined to make the heterogeneous blend, depending on desired physical properties of a shaped article. In particular, selection of an extruder and melt mixer is important, for obtaining a low shear mixing effect in case of a heterogeneous blend. Shaped articles of the heterogeneous blend obtained in a low shear mixing condition are multilayered heterogeneous articles subjected to a biaxial stretching such that the second polymer is present in the form of discontinuous distributed multiple layers in the polyolefin. This technique is described in greater detail in US Patent No. 4,410,482.

The shear mixing temperature condition in an extruder should be determined as a temperature condition approximately equal to or slightly higher than the melting point of the second polymer. In die shaping such as blow molding and blown film molding, the temperature condition should be determined as a temperature condition sufficiently higher than the melting point of the second polymer. The heterogeneous blends obtained under these shear mixing and shaping conditions are then cooled to a temperature lower than the melting point of the blend of polyolefin. Thus, shaped articles can be obtained.

An advantage of the present invention is that the reactive low molecular weight compounds are concentrically distributed at the interface between the polyolefin and the second polymer during the extrusion process to make the copolymer made from the components be concentrically present at the interface, thereby achieving improvements over the prior art using macromolecular compatabilizers. Another advantage of the present invention is that the reactive low molecular weight compounds not only serve as compounds to make the copolymer composed of polyolefin and the second polymer in the heterogeneous blend, but also cause a branching or crosslinking reaction of the polyolefin, so that the viscosity of the polyolefin phase is increased, thereby causing the second polymer to form a wide laminar structure in the polyolefin matrix phase and thus shaped articles have improved impermeability.

There are patents which achieve an improvement in viscosity, in a manner different from that of the present invention. For instance, European Patent No. 238,197 discloses that an addition of a coupling agent is carried out when a barrier polymer is blended with a matrix polymer compatible with the barrier polymer and that the added coupling agent conducts a branching or crosslinking reaction of the matrix polymer, so that the viscosity of the matrix phase is increased, thereby causing the phase separation between the two polymers to be made in larger scale and thus shaped articles to have an improvement in impermeability.

The present invention will be understood more readily with reference to the following examples and the comparative examples; however these examples are intended to illustrate the invention and are not to be construed to limit the scope of the present invention. Unless specifically described, heterogeneous blends are those made by the process described in Example 1 while homogeneous blends are those made by the process described in Example 2.

### Example 1

In a super mixer, reactive low molecular weight compounds made up of maleic anhydride and dicumyl peroxide at a weight ratio of 30:1 were coated onto the surfaces of particles of a polyamide. The polyamide was a nylon 6 having a melting point of 220°C and a relative viscosity of 3.2 and available from Dong Yang Nylon Co., Ltd in Korea under the trademark designation "l031 BRT"®. The polyamide particles coated with the reactive low molecular weight compounds were then mixed with HDPE particles at a weight ratio described in the following Table 1, using a tumble mixer. Thus, the mixture of the coated nylon particles and the HDPE particles was made. The HDPE was a HDPE having a density of 0.955 and a melt index of 0.3 as determined according to the procedure A of ASTM D-1238 and available from Yu Kong Ltd in Korea under the trademark designation "YUCLAIR BD 800"®.

The mixture was then fed into an auto blow molding machine such as that sold by Shin Hwa Industrial Co. Ltd in Korea identified as model SE 60/ABM7 and equipped with a low shear mixing screw and tooling. In the blow molding machine, a bottle with a capacity of 1 liter was blow molded under a low shear mixing condition. At this time, an extrusion temperature of 240°C was used.

Visual testing was conducted by inspection of a wall section of the bottle, with the use of a scanning electron microscope such as that identified as Philips 515®. The structure of bottle wall section was a multilayered structure wherein the laminar second polymer was present in the form of discontinuous distributed multiple layers in the HDPE, as shown in FIG. 1 which is a photograph by a scanning electron microscope. Barrier to permeation of fluid was tested by placing 750 grams of toluene into the 1 liter bottle made by the process of the present invention, and then determining the barrier properties after 30 days. Results of the tests are shown in Table 1.

### Example 2

The blend obtained in Example 1 was homogenized in a Werner & Pfleiderer twin screw extruder under a high shear mixing condition and was then fed directly to the same auto blow molding machine used in Example 1 above, to make a one liter bottle of homogeneous wall structure. Results of the tests are shown in Table 1.

### Comparative Example 1

A one liter bottle was made in the same manner as in Example 1, except that as a compatibilizer an alkylcarboxyl-substituted polyolefin was used, in place of the reactive low molecular weight compounds used in Example 1. The alkylcarboxyl-substituted polyolefin compatibilizer was obtained by melt grafting maleic anhydride onto a polyethylene having a density of 0.948 and a melt index of 20, in a well known manner. The compatibilizer had a graft ratio of 0.98% and a melt index of 10. Results of the tests are shown in Table 1.

### Comparative Example 2

Using the same conditions as in Example 2, a one liter bottle of homogeneous wall structure was made. Results of the tests are shown in Table 1.

**Table 1**

| Exam. No. | HDPE/ Nylon 6/ RLMC^{*1)} or Compatibilizer | Nature of Blend | P.F.^{*4)} | Strain (%) | Elasticity (Kg/cm²) |
|---|---|---|---|---|---|
| Exam.1 | 92/8/0.06 | Hetero^{*2)} | 64 | 546 | 10160 |
| Exam.2 | 92/8/0.06 | Homo^{*3)} | 1.9 | 661 | 11530 |
| Comp.1 | 90/8/2 | Hetero^{*2)} | 34 | 490 | 8070 |
| Comp.2 | 90/8/2 | Homo^{*3)} | 1.6 | 621 | 10920 |

| | | | | | |
|---|---|---|---|---|---|
| Note: RLMC^{*1)} is reactive low molecular weight compounds. | | | | | |
| Hetero^{*2)} is heterogeneous; | | | | | |
| Homo^{*3)} is homogeneous; and | | | | | |
| P.F^{*4)} is solvent weight loss in HDPE packing/solvent weight loss in barrier packing. | | | | | |

### Examples 3 to 8

Using the same materials and under the same conditions as in Example 1 or Example 2, one liter bottles of heterogeneous or homogeneous wall structures were made at different weight ratios of the materials as described in the following Table 2, except that a mixture of fumaric acid and t-butyl hydroperoxide at a weight ratio of 30:1 was used as reactive low molecular weight compounds and that along with the reactive low molecular weight compounds, zinc oxide was coated onto the surfaces of particles of the nylon, in an amount of 0.1 weight % based on the weight of the nylon. Results of the tests are shown in Table 2.

**Table 2**

| Exam. No. | HDPE/ Nylon 6/ RLMC^{*1)} | Nature of Blend | P.F.^{*4)} | Strain (%) | Elasticity (Kg/cm²) |
|---|---|---|---|---|---|
| Exam.3 | 94/6/0.03 | Hetero^{*2)} | 39 | 526 | 7900 |
| Exam.4 | 94/6/0.06 | Hetero^{*2)} | 47 | 553 | 8230 |
| Exam.5 | 94/6/0.12 | Hetero^{*2)} | 56 | 587 | 9520 |
| Exam.6 | 94/6/0.03 | Homo^{*3)} | 1.5 | 672 | 10030 |
| Exam.7 | 94/6/0.06 | Homo^{*3)} | 1.6 | 709 | 10490 |
| Exam.8 | 94/6/0.12 | Homo^{*3)} | 1.7 | 723 | 10780 |

| | | | | | |
|---|---|---|---|---|---|
| Note: RLMC^{*1)} is reactive low molecular weight compounds. | | | | | |
| Hetero^{*2)} is heterogeneous; | | | | | |
| Homo^{*3)} is homogeneous; and | | | | | |
| P.F^{*4)} is solvent weight loss in HDPE packing/solvent weight loss in barrier packing. | | | | | |

### Examples 9 and 10

Using the mixture obtained by mixing uniformly the same materials of polyolefin, polyamide and reactive low molecular weight compounds under the same condition as in Example 1, one liter bottles of heterogeneous wall structures were made at different weight ratios of the materials as described in the following Table 3, except that a mixture of maleic anhydride and benzoyl peroxide at a weight ratio of 30:1 was used as a reactive low molecular weight compounds and that the reactive low molecular weight compound, zinc oxide was not coated onto the surfaces of particles of the polyamide which was nylon 6. Results of the tests are shown in Table 3.

### Examples 11 and 12

One liter bottles of homogeneous wall structures were made at different weight ratios of the materials as described in Table 3, under the same conditions as in Examples 9 and 10, respectively. Results of the tests are shown in Table 3.

### Comparative Examples 3 and 4

One liter bottles were made at different weight ratios of the materials as described in Table 3, under the same conditions as in Comparative Examples 1 and 2, respectively. Results of the tests are shown in Table 3.

**Table 3**

| Exam. No. | HDPE/ Nylon 6/ RLMC^{*1)} or compatibilizer | Nature of Blend | P.F.^{*4)} | Strain. (%) |
|---|---|---|---|---|
| Exam.9 | 88/12/0.07 | Hetero^{*2)} | 71 | 497 |
| Exam.10 | 88/12/0.10 | Hetero^{*2)} | 78 | 521 |
| Exam.11 | 90/10/0.06 | Homo^{*3)} | 2.2 | 603 |
| Exam.12 | 90/10/0.09 | Homo^{*3)} | 2.3 | 623 |
| Comp.3 | 88/12/4 | Hetero^{*2)} | 49 | 430 |
| Comp.4 | 90/10/3 | Homo^{*3)} | 1.8 | 583 |

| | | | | |
|---|---|---|---|---|
| Note: RLMC^{*1)} is reactive low molecular weight compounds. | | | | |
| Hetero^{*2)} is heterogeneous; | | | | |
| Homo^{*3)} is homogeneous; and | | | | |
| P.F^{*4)} is solvent weight loss in HDPE packing/solvent weight loss in barrier packing. | | | | |

### Examples 13 to 15

Heterogeneous blend films having a thickness of 0.1 mm were made using a blown film extruder such as that sold by Shin Hwa Industrial Co., Ltd and identified as model SE-50/EHV-800. In these Examples, polyethylene terephthalate was used as the second polymer component, in place of nylon. Other material components were the same as those in Example 1.

The polyethylene terephthalate used is a polyethylene terephthalate having a melting point of 255°C and an intrinsic viscosity of 0.77 and commercially available from Sun Kyung Industry Co. Ltd in Korea under the trademark designation "SKYPET-BB"®. The HDPE was a HDPE having a density of 0.960 and a melt index of 0.4 and commercially available from Yu Kong Ltd under the trademark designation "YUCLAIR BC 900"®.

For conducting a fluid permeability test on each film made by the process of the present invention, a blown film sample having a thickness of 0.1 mm and a width of 10 cm was prepared. A comparative film sample was also prepared in the same way but using HDPE alone. 100 grams of toluene were placed into each film sample. The test on each film sample was run for 30 days to a substantial weight loss. Results are reported in Table 4. Each value of weight loss described in Table 4 means a ratio of the weight loss in each corresponding film sample of the present invention to the weight loss in the comparative film sample.

**Table 4**

| Examp. No. | HDPE/ Pet/ RLMC^{*2)} | Nature of Blend | P.F.^{*1)} |
|---|---|---|---|
| Exam.13 | 80/20/0.12 | Heterogeneous | 13 |
| Exam.14 | 80/20/0.16 | Heterogeneous | 18 |
| Exam.15 | 80/20/0.24 | Heterogeneous | 20 |

| | | | |
|---|---|---|---|
| P.F.*¹⁾ is solvent weight loss in HDPE packing/solvent weight loss in. barrier packing; and | | | |
| RLMC *²⁾ is reactive low molecular weight compounds. | | | |

Although the preferred embodiments of the invention have been disclosed for illustrative purpose, those skilled in the art will appreciate that various modifications, additions and substitutions are possible, without departing from the invention as defined in the accompanying claims.

## Claims

1. A process of making a polyolefin-based blend comprising the steps of:
making a mixture by adding reactive low molecular weight compounds consisting essentially of a polar compound selected from one or more ethylenically unsaturated monomers containing one or two polar functional groups which can react with the second polymer and an initiator in an amount of from 0.01 weight % to 0.72 weight % to particles of a polyolefin selected from polyethylene, polypropylene, polybutylene and a copolymer thereof in an amount of from 60 weight % to 96 weight % and particles of a second polymer selected from polyamide, polyester, ethylene/vinyl alcohol copolymer and polyacrylonitrile in an amount of from 4 weight % to 40 weight %, the compounds being based on the total weight of said polyolefin and said second polymer; and
extruding the mixture under low shear melt mixing conditions to make a heterogeneous blend having discontinuous multiple laminar layers of the mixture.

2. A process according to claim 1, wherein the content of the polar compound is from 0.01 weight % to 0.5 weight % based on the total weight of the polyolefin and the second polymer and the content of the initiator is from 0.0004 weight % to 0.2 weight % based on the same total weight.

3. A process according to either claim 1 or claim 2, wherein the step of making the mixture comprises primarily coating the low molecular weight compounds onto the surfaces of the particles of the second polymer, and mixing the second polymer particles coated with the low molecular weight compounds with the polyolefin particles, and then extruding the mixture to make a blend thereof.

4. A process according to either claim 1 or claim 2, wherein the step of making the mixture comprises mixing the polyolefin particles, the second polymer particles and the reactive low molecular weight compounds together, and then extruding the mixture to make a blend thereof.

5. A process according to any one of claims 1 to 4, wherein the polar compound of the reactive low molecular weight compounds is one or more selected from carboxylic acid, anhydride and ester monomer.

6. A process according to claim 5, wherein the carboxylic acid is selected from ethacrylic acid, methacrylic acid, acrylic acid, maleic acid, fumaric acid and itaconic acid; the ester monomer is selected from glycidyl methacrylate, 2-hydroxyethyl acrylate, 2-hydroxyethyl methacrylate, monoethyl maleate, diethyl maleate and di-n-butyl maleate; and the anhydride is selected from maleic anhydride, dodecenyl succinic anhydride, 5-norbornene-2,3-anhydride and nadic anhydride.

7. A process according to any one of claims 1 to 6, wherein the initiator of the reactive low molecular weight compounds is one or more selected from acyl peroxide, dialkyl or aralkyl peroxide, peroxyester, hydroperoxide, ketone peroxide and azoic compound.

8. A process according to claim 7, wherein the acyl peroxide is benzoyl peroxide; the dialkyl or aralkyl peroxide is selected from di-t-butylperoxide, dicumyl peroxide, cumyl butylperoxide, 1,1-di-t-butylperoxy-3,5,5-trimethylcyclohexane, 2,5-dimethyl-2,5-di-t-butylperoxyhexane, and bis(α-t-butylperoxy isopropyl benzene); the peroxyester is selected from t-butylperoxy pivalate, t-butyl di(perphthalate), dialkylperoxy monocarbonate, peroxy dicarbonate, t-butyl perbenzoate, 2,5-dimethylhexyl-2,5-di(perbenzoate) and t-butyl peroctoate; the hydroperoxide is selected from t-butyl hydroperoxide, p-methane hydroperoxide; the ketone peroxide is selected from cyclohexanone peroxide and methylethylketone peroxide; and the azoic compound is azobis isobutyronitrile.

9. A process according to any one of claims 1 to 8, wherein the mixture further includes a salt formation agent.

10. A process according to claim 9, wherein the salt formation agent is one or more selected from magnesium oxide, titanium oxide and zinc oxide.

11. A process according to either claim 9 or claim 10, wherein the content of the salt formation agent is from 0.004 weight % to 0.18 weight % based on the total weight of the polyolefin and the second polymer.

12. An article made by a process of making a polyolefin based blend comprising the steps of
making a mixture by adding reactive low molecular weight compounds consisting essentially of a polar compound selected from one or more ethylenically unsaturated monomers containing one or two polar functional groups which can react with the second polymer and an initiator in an amount of from 0.01 weight % to 0.72 weight % to particles of a polyolefin selected from polyolefin selected from polyethylene, polypropylene, polybutylene and a copolymer thereof in an amount of from 60 weight % to 96 weight % and particles of a second polymer selected from polyamide, polyester, ethylene/vinyl alcohol copolymer and polyacrylonitrile in an amount of from 4 weight % to 40 weight %, the weight % of the reactive low molecular weight compounds being based on the total weight of said polyolefin and said second polymer; and
extruding the mixture under a low shear melt mixing conditions to make a heterogeneous blend having discontinuous multiple laminar layers of the mixture, the article being shaped into a container, film, pipe, sheet or filament.

## Patentansprüche

1. Verfahren zur Herstellung einer Schmelzmischung bzw. eines Blends auf Polyolefin-Basis, umfassend die Schritte:
Herstellung einer Mischung durch Zugeben reaktiver niedermolekularer Verbindungen, die im wesentlichen aus einer polaren Verbindung bestehen, die ausgewählt ist aus einem oder mehreren ethylenischen ungesättigten Monomeren, welche oder welches eine oder zwei polare funktionelle Gruppen enthält oder enthalten, die mit dem zweiten Polymer reagieren können, und eines Initiators in einem Anteil von 0,01 bis 0,72 Gew.-% zu Teilchen eines Polyolefins, ausgewählt aus Polyethylen, Polypropylen, Polybutylen und einem Copolymer daraus, in einem Anteil von 60 bis 96 Gew.-% und Teilchen eines zweiten Polymers, ausgewählt aus Polyamid, Polyester, Ethylen/Vinylalkohol-Copolymer und Polyacrylnitril, in einem Anteil von 4 bis 40 Gew.-%, wobei die Verbindungen auf das Gesamtgewicht des Polyolefins und des zweiten Polymers bezogen sind; und
Extrudieren der Mischung unter Schmelzmischbedingungen mit geringer Scherung zur Herstellung einer heterogenen Schmelzmischung bzw. eines Blends mit vielfachen diskontinuierlichen laminaren Schichten der Mischung.

2. Verfahren nach Anspruch 1, worin der Gehalt an der polaren Verbindung von 0,01 Gew.-% bis 0,5 Gew.-% beträgt, bezogen auf das Gesamtgewicht des Polyolefins und des zweiten Polymers, und der Gehalt an Initiator von 0,0004 Gew.-% bis 0,2 Gew.-% beträgt, bezogen auf dasselbe Gesamtgewicht.

3. Verfahren nach Anspruch 1 oder 2, worin der Schritt der Herstellung der Mischung hauptsächlich das Beschichten der Oberflächen der Teilchen des zweiten Polymers mit den niedermolekularen Verbindungen und das Mischen der zweiten mit den niedermolekularen verbindungen beschichteten Polymerteilchen mit den Polyolefinteilchen und dann das Extrudieren der Mischung zur Herstellung einer Schmelzmischung bzw. eines Blends daraus umfaßt.

4. Verfahren nach Anspruch 1 oder 2, worin der Schritt der Herstellung der Mischung das Zusammenmischen der Polyolefinteilchen, der zweiten Polymerteilchen und der reaktiven niedermolekularen Verbindungen von und anschließendes Extrudieren der Mischung zur Herstellung einer Schmelzmischung bzw. eines Blends daraus umfaßt.

5. Verfahren nach einem der Ansprüche 1 bis 4, worin die polare Verbindung aus den reaktiven niedermolekularen verbindungen eine oder mehr als eine aus carbonsäure, Anhydrid und Ester-Monomer ausgewählte ist.

6. Verfahren nach Anspruch 5, worin die Carbonsäure ausgewählt ist aus Ethacrylsäure, Methacrylsäure, Acrylsäure, Maleinsäure, Fumarsäure und Itaconsäure; das Ester-Monomer ausgewählt ist aus Glycidylmethacrylat, 2-Hydroxyethylacrylat, 2-Hydroxyethylmethacrylat, Monoethylmaleat, Diethylmaleat und Di-n-butylmaleat; und das Anhydrid ausgewählt ist aus Maleinsäureanhydrid, Dodecenylbernsteinsäureanhydrid, 5-Norbornen-2,3-anhydrid und Nadinanhydrid.

7. Verfahren nach einem der Ansprüche 1 bis 6, worin der Initiator der reaktiven niedermolekularen Verbindungen ein oder mehr als ein aus Acylperoxid, Dialkyl- oder Aralkylperoxid, Peroxyester, Hydroperoxid, Ketonperoxid und Azoverbindungen ausgewählter ist.

8. Verfahren nach Anspruch 7, worin das Acylperoxid Benzoylperoxid ist; das Dialkyl- oder Aralkylperoxid ausgewählt ist aus Di-t-butylperoxid, Dicumylperoxid, Cumylbutylperoxid, 1,1-Di-t-butylperoxy-3,5,5-trimethylcyclohexan, 2,5- Dimethyl-2,5-di-t-butylperoxyhexan und bis(α-t-butylperoxy-Isopropylbenzol); der Peroxyester ausgewählt ist aus t-Butylperoxypivalat, t-Butyldi(perphthalat), Dialkylperoxymonocarbonat, Peroxydicarbonat, t-Butylperbenzoat, 2,5-Dimethylhexyl-2,5-di(perbenzoat) und t-Butylperoctoat; das Hydroperoxid ausgewählt ist aus t-Butylhydroperoxid, p-Methanhydroperoxid; das Ketonperoxid ausgewählt ist aus Cyclohexanonperoxid und Methylethylketonperoxid; und die Azoverbindung Azobisisobutyronitrit ist.

9. Verfahren nach einem der Ansprüche 1 bis 8, worin die Mischung weiter ein salzbildendes Mittel enthält.

10. Verfahren nach Anspruch 9, worin das salzbildende Mittel eines oder mehr als eines ausgewählt aus Magnesiumoxid, Titanoxid und Zinkoxid ist.

11. Verfahren nach Anspruch 9 oder 10, worin der Gehalt an dem salzbildenden Mittel von 0,004 Gew.-% bis 0,18 Gew.-% beträgt, bezogen auf das Gesamtgewicht des Polyolefins und des zweiten Polymers.

12. Gegenstand, hergestellt durch ein Verfahren zur Herstellung einer Schmelzmischung bzw. eines Blends auf Polyolefin-Basis, umfassend die Schritte
Herstellung einer Mischung durch Zugeben reaktiver Verbindungen von niedrigem Molekulargewicht, die im wesentlichen aus einer polaren Verbindung bestehen, die ausgewählt ist aus einem oder mehreren ethylenischen ungesättigten Monomeren, welche oder welches eine oder zwei polare funktionelle Gruppen enthält oder enthalten, die mit dem zweiten Polymer reagieren können, und eines Initiators in einem Anteil von 0,01 bis 0,72 Gew.-% zu Teilchen eines Polyolefins, ausgewählt aus Polyethylen, Polypropylen, Polybutylen und einem Copolymer daraus, in einem Anteil von 60 bis 96 Gew.-% und Teilchen eines zweiten Polymers, ausgewählt aus Polyamid, Polyester, Ethylen/Vinylalkohol-Copolymer und Polyacrylnitril, in einem Anteil von 4 bis 40 Gew.-%, wobei die Gew.-% der reaktiven niedermolekularen Verbindungen auf das Gesamtgewicht des Polyolefins und des zweiten Polymers bezogen sind; und
Extrudieren der Mischung unter Schmelzmischbedingungen mit geringer Scherung zur Herstellung einer heterogenen Schmelzmischung bzw. eines -blends mit vielfachen diskontinuierlichen laminaren Schichten der Mischung, wobei der Gegenstand als Behälter, Film, Rohr, Folie oder Filament ausgeformt ist.

## Revendications

1. Procédé de préparation d'un mélange à base de polyoléfine, comprenant les étapes consistant à :
préparer un mélange en ajoutant des composés réactifs de bas poids moléculaire essentiellement constitués d'un composé polaire choisi parmi un ou plusieurs monomères éthyléniquement insaturés contenant un ou deux groupes polaires fonctionnels qui peuvent réagir avec le second polymère, et un initiateur en une proportion de 0,01 % en poids à 0,72 % en poids, à des particules d'une polyoléfine choisie parmi un polyéthylène, polypropylène, polybutylène et un copolymère de ceux-ci en une proportion de 60 % en poids à 96 % en poids et des particules d'un second polymère choisi parmi un polyamide, polyester, un copolymère éthylène/alcool vinylique et un polyacrylonitrile en une proportion de 4 % en poids à 40 % en poids, les composés étant basés sur le poids total de ladite polyoléfine et dudit second polymère ; et
extruder le mélange dans des conditions de mélange au fondu à faible cisaillement pour préparer un mélange hétérogène ayant des couches stratifiées multiples discontinues du mélange.

2. Procédé selon la revendication 1, dans lequel la proportion en composé polaire est de 0,01 % en poids à 0,5 % en poids sur la base du poids total de la polyoléfine et du second polymère, et la proportion en initiateur est de 0,0004 % en poids à 0,2 % en poids sur la base du même poids total.

3. Procédé selon la revendication 1 ou la revendication 2, dans lequel l'étape de préparation du mélange comprend principalement l'application des composés de bas poids moléculaire sur les surfaces des particules du second polymère, et le mélange des particules du second polymère, revêtues avec les composés de bas poids moléculaire, avec les particules de polyoléfine, puis l'extrusion du mélange pour préparer un mélange de ceux-ci.

4. Procédé selon la revendication 1 ou la revendication 2, dans lequel l'étape de préparation du mélange comprend le mélange des particules de polyoléfine, des particules du second polymère et des composés réactifs de bas poids moléculaire ensemble, puis l'extrusion du mélange pour préparer un mélange de ceux-ci.

5. Procédé selon l'une quelconque des revendications 1 à 4, dans lequel le composé polaire des composés réactifs de bas poids moléculaire est un ou plusieurs composés choisis parmi un acide carboxylique, un anhydride et un monomère ester.

6. Procédé selon la revendication 5, dans lequel l'acide carboxylique est choisi parmi l'acide éthacrylique, l'acide méthacrylique, l'acide acrylique, l'acide maléique, l'acide fumarique et l'acide itaconique ; le monomère ester est choisi parmi le méthacrylate de glycidyle, l'acrylate de 2-hydroxyéthyle, le méthacrylate de 2-hydroxyéthyle, le maléate de monoéthyle, le maléate de diéthyle et le maléate de di-n-butyle ; et l'anhydride est choisi parmi l'anhydride maléique, l'anhydride dodécénylsuccinique, le 5-norbornène-2,3-anhydride et l'anhydride nadique.

7. Procédé selon l'une quelconque des revendications 1 à 6, dans lequel l'initiateur des composés réactifs de bas poids moléculaire est un ou plusieurs composés choisis parmi un peroxyde d'acyle, un peroxyde de dialkyle ou d'aralkyle, un peroxyester, un hydroperoxyde, un peroxyde de cétone et un composé azoïque.

8. Procédé selon la revendication 7, dans lequel le peroxyde d'acyle est le peroxyde de benzoyle ; le peroxyde de dialkyle ou d'aralkyle est choisi parmi le peroxyde de di-t-butyle, le peroxyde de dicumyle, le peroxyde de cumyle et de butyle, le 1,1-di-t-butylperoxy-3,5,5-triméthylcyclohexane, le 2,5-diméthyl-2,5-di-t-butylperoxyhexane et le bis(α-butylperoxyisopropylbenzène) ; le peroxyester est choisi parmi le pivalate de t-butylperoxy, le di(perphtalate) de t-butyle ; le monocarbonate de dialkylperoxy, le peroxydicarbonate, le perbenzoate de t-butyle, le 2,5-diméthylhexyl-2,5-di(perbenzoate) et le peroctoate de t-butyle ; l'hydroperoxyde est choisi parmi l'hydroperoxyde de t-butyle, l'hydroperoxyde de p-méthane ; le peroxyde de cétone est choisi parmi le peroxyde de cyclohexanone et le peroxyde de méthyléthylcétone ; et le composé azoïque est l'azobisisobutyronitrile.

9. Procédé selon l'une quelconque des revendications 1 à 8, dans lequel le mélange inclut en outre un agent de formation de sel.

10. Procédé selon la revendication 9, dans lequel l'agent de formation de sel est une ou plusieurs substances choisies parmi l'oxyde de magnésium, l'oxyde de titane et l'oxyde de zinc.

11. Procédé selon la revendication 9 ou la revendication 10, dans lequel la proportion en agent de formation de sel est de 0,004 % en poids à 0,18 % en poids sur la base du poids total de la polyoléfine et du second polymère.

12. Article préparé par un procédé de préparation d'un mélange à base de polyoléfine, comprenant les étapes consistant à
préparer un mélange en ajoutant des composés réactifs de bas poids moléculaire essentiellement constitués d'un composé polaire choisi parmi un ou plusieurs monomères éthyléniquement insaturés contenant un ou deux groupes polaires fonctionnels qui peuvent réagir avec le second polymère, et un initiateur en une proportion de 0,01 % en poids à 0,72 % en poids, à des particules d'une polyoléfine choisie parmi un polyéthylène, polypropylène, polybutylène et un copolymère de ceux-ci en une proportion de 60 % en poids à 96 % en poids et des particules d'un second polymère choisi parmi un polyamide, polyester, un copolymère éthylène/alcool vinylique et un polyacrylonitrile en une proportion de 4 % en poids à 40 % en poids, le pourcentage en poids des composés de bas poids moléculaire étant basé sur le poids total de ladite polyoléfine et dudit second polymère ; et
extruder le mélange dans des conditions de mélange au fondu à faible cisaillement pour préparer un mélange hétérogène ayant des couches stratifiées multiples discontinues du mélange, l'article étant façonné en un récipient, un film, un tuyau, une feuille ou un filament.
